# EUROPÄISCHE PATENTANMELDUNG

(11) **EP 2 814 127 A1**
(43) Veröffentlichungstag der Anmeldung: **17.12.2014**
(21) Anmeldenummer: 14171334.7
(22) Anmeldetag: 05.06.2014
(51) Int. Cl.: H02G 3/00, H02G 3/32

(54) **Kabelschelle**

(30) Priorität: 14.06.2013 DE 202013102566 U
(71) Anmelder: OBO Bettermann GmbH & Co. KG, 58710 Menden (DE)
(72) Erfinder: Gutt, Wolfgang, 58708 Menden (DE)
(74) Vertreter: Haverkamp, Jens

(57) **Zusammenfassung**

Eine Kabelschelle 3 umfasst eine Gewindestange 8 mit einem Kopf 10 an ihrem einen Ende und mit einem auf zumindest ein zu haltendes Kabel wirkendes Klemmelement 9 an ihrem anderen Ende. Ferner umfasst die Kabelschelle 3 eine Kabeleinfassung 1 und einen zum Kämmen des Gewindes der Gewindestange 8 ausgelegten Mutterngewinde aufweisenden Befestiger 2. Das Mutterngewinde des Befestigers 2 weist zwei in Längserstreckung desselben voneinander beabstandete, einander bezüglich der Längsachse des Mutterngewindes gegenüberliegende und sich über maximal 180 Grad erstreckende Gewindeabschnitte 4, 4.1 auf. Der Befestiger 2 umfasst einen winklig zur Längsachse des Mutterngewindes angeordneten und dieses zwischen den voneinander wegweisenden Abschlüssen der Gewindeabschnitte 4, 4.1 schneidenden Durchzug, dessen lichte Weite zumindest dem Außendurchmessers des Mutterngewindes entspricht.

## Beschreibung

Die Erfindung betrifft eine Kabelschelle mit einer Gewindestange, die an ihrem einen Ende einen Kopf und an ihrem anderen Ende ein auf zumindest ein zu haltendes Kabel wirkendes Klemmelement aufweist, mit einer Kabeleinfassung und mit einem zum Kämmen des Gewindes der Gewindestange ausgelegten Mutterngewinde aufweisenden Befestiger.

Kabelschellen werden eingesetzt, um Kabel oder andere Leitungen, mitunter auch Schläuche, typischerweise an ein Leitungsinstallationssystem, beispielsweise eine Kabelleiter anzuschließen. Ein solches System bildet bei einer solchen Ausführung eine Tragestruktur aus, an der derartige Installationen, also beispielsweise Kabel geführt werden. Vorbekannte Kabelschellen umfassen eine bügelartige, U-förmige Kabeleinfassung, wobei die freien Enden der Schenkel der Einfassung Anschlusselemente zum Anschließen der Kabelschelle an die Tragstruktur aufweisen. Im Falle einer Kabelleiter als Tragstruktur dienen Sprossen zum Anschließen der Kabelschellen. Die Sprossen sind C-förmig hinterschnitten. Die Anschlusselemente an den Enden der Schenkel einer solchen Kabelschelle sind zum Eingreifen in die hinterschnittene Profilierung einer solchen Sprosse konzipiert. An die Kabeleinfassung ist eine Gewindemutter als Befestiger angeschlossen, und zwar im Bereich des Scheitels der Einfassung. Innerhalb der Einfassung befindet sich ein Klemmelement, welches an dem einen Ende einer Gewindestange drehentkoppelt angeschlossen ist. Die Gewindestange kämmt das Mutterngewinde des Befestigers und verfügt an ihrem anderen Ende über einen Kopf mit Betätigungsflächen zum Anschließen eines Schraubwerkzeuges. In vielen Fällen ist der Kopf einer solchen Gewindestange als Sechskantkopf ausgeführt. Angeschlossen wird eine solche Kabelschelle an eine Sprosse einer Kabelleiter durch Einbringen der Anschlusselemente in den Hinterschnitt der Sprossen und anschließendes Verklemmen des oder der dann von der Einfassung eingefassten Kabel mit dem an der Gewindestange befindlichen Klemmelement. Dazu wird das Klemmelement durch Drehen der Gewindestange in Richtung der einzufassenden Kabel bewegt, bis das oder die Kabel zwischen dem Klemmelement und der Oberseite der Sprosse eingeklemmt sind. Durch dieses Klemmen ist zugleich die Kabelschelle an die Sprosse angeschlossen.

In anderen Anwendungen ist die Kabeleinfassung nach Art eines Gehäuses ausgebildet und somit auch unterseitig geschlossen.

Zum Halten von Kabeln an den Sprossen von Kabelleitern werden in Längserstreckung eines jeden Kabels oder einer Gruppe aus wenigen Kabeln eine Vielzahl von Kabelschellen benötigt. Darüber hinaus werden typischerweise in solchen Kabelleitern mehrere Kabelstränge nebeneinander verlegt, die regelmäßig individuell mit Kabelschellen an die Sprossen angeschlossen werden müssen. Diesem Zweck genügen die vorbekannten Kabelschellen. Aufgrund des notwendigen Einschwenkens der Kabeleinfassung einer solchen Kabelschelle, um deren Anschlusselemente in den Hinterschnitt der Sprossen einbringen zu können, ist es erforderlich, dass das jeweilige Klemmelement in Bezug auf seine spätere Klemmstellung weit zurückgefahren ist, sich mithin im Bereich der Basis der Einfassung befindet. Infolgedessen muss nach Positionieren der Kabelschelle mit ihren Anschlusselementen in den Hinterschnitt der Sprossen eingreifend die Gewindestange entsprechend weit und lange gedreht werden, bis das Klemmelement gegen das zumindest eine zu haltende Kabel wirkt. Erst dann ist auch die Kabelschelle unverlierbar an die Sprosse angeschlossen. Dieser anfängliche Schraubvorgang lässt sich zwar in aller Regel ohne Weiteres durchführen, benötigt jedoch eine gewisse Zeit. Berücksichtigt man die große Anzahl an Kabelschellen, die zum bestimmungsgemäßen Anschließen eines Kabels an eine solche Kabelleiter montiert werden müssen, wäre eine Kabelschelle von Vorteil, mit der die Montagezeit bereits geringfügig reduziert werden kann.

Ausgehend von diesem diskutierten Stand der Technik liegt der Erfindung daher die Aufgabe zugrunde, eine Kabelschelle der eingangs genannten Art dergestalt auszubilden, dass eine Klemmwirkung zwischen dem Klemmelement und dem damit einzuklemmenden Kabel rascher herbeigeführt werden kann.

Gelöst wird diese Aufgabe erfindungsgemäß durch eine eingangs genannte, gattungsgemäße Kabelschelle, bei der das Mutterngewinde des Befestigers zwei in Längserstreckung des Mutterngewindes voneinander beabstandete, einander bezüglich der Längsachse des Mutterngewindes gegenüberliegende und sich über maximal 180 Grad erstreckende Gewindeabschnitte aufweist und bei der der Befestiger einen winklig zur Längsachse des Mutterngewindes angeordneten und dieses zwischen den voneinander wegweisenden Abschlüssen der Gewindeabschnitte schneidenden Durchzug umfasst, dessen lichte Weite zumindest dem Außendurchmessers des Mutterngewindes entspricht.

Wenn im Rahmen dieser Ausführungen der Begriff "Kabel" auch in Zusammenstellung mit anderen Worten benutzt wird, ist hiermit prinzipiell jedwede Leitung, sei sie als elektrische, optische oder fluidführende Leitung ausgelegt.

Bei dem Befestiger dieser Kabelschelle ist winklig zur Längsachse seines Mutterngewindes ein Durchzug vorgesehen. Die lichte Weite des Durchzuges entspricht zumindest dem Außendurchmesser des Mutterngewindes des Befestigers und somit zumindest dem Außendurchmesser des Gewindes der Gewindestange, welches das Mutterngewinde des Befestigers kämmen soll. Infolge dieser Anordnung ist das Mutterngewinde dieses Befestigers durch zwei einander bezüglich der Längsachse desselben gegenüberliegende und sich jeweils über maximal 180 Grad erstreckende Gewindeabschnitte gebildet. Dieser Befestiger kämmt in seiner einen Stellung, wenn die Längsachse des Mutterngewindes mit der Längsachse der Gewindestange zur Deckung gebracht worden ist, mit seinem Mutterngewinde das Außengewinde der Gewindestange. Aufgrund der winkligen Anordnung des Durchzuges zur Längsachse des Mutterngewindes ist allein eine Schwenkbewegung des Befestigers notwendig, um die Längsachse des Durchzuges in Deckung mit der Längsachse der Gewindestange zu bringen. Bei einer solchen Anordnung ist der Befestiger ohne Weiteres auf der Gewindestange hin- und herschiebbar. Ein Überwinden größerer Gewindestangenabschnitte kann somit ohne Weiteres durch Verschieben des Befestigers auf der Gewindestange vorgenommen werden. Hierin liegt der Vorteil begründet, dass das Klemmelement der Kabelschelle rascher in Kontakt mit dem oder den einzuklemmenden Kabeln gebracht werden kann.

Das Kippen des Befestigers um sein Mutterngewinde in Eingriff mit dem Gewinde einer Gewindestange zu bringen und umgekehrt, wobei diese Kippbewegung auf einer Ebene erfolgt, in der die Längsachse des Mutterngewindes und die Längsachse des Durchzuges angeordnet sind, kann genutzt werden, um eine selbsttätige Verriegelung des Befestigers mit seinem Mutterngewinde an dem Außengewinde einer Gewindestange herbeizuführen. Dieses ist beispielsweise möglich, wenn der Befestiger eine an zumindest einem Ende rechtwinklig zu der Längsachse seines Mutterngewindes angeordnete Anlagefläche aufweist. Befindet sich auf der Gewindestange ein im rechten Winkel zu der Längsachse derselben angeordnetes Widerlager und stößt der Befestiger mit seiner Anlagefläche gegen die Widerlager, wird er selbsttätig gekippt, wodurch die sein Mutterngewinde bildenden Gewindeabschnitte mit dem Außengewinde der Gewindestange in Eingriff gestellt werden. Es versteht sich, dass je nach benötigter Ausführung des Befestigers die Anlagefläche auch eine andere Raumlage zur Längsachse des Mutterngewindes aufweisen kann. Zweckmäßig ist die Ausgestaltung eines solchen Befestigers, bei dem seine beiden Endflächen in der vorbeschriebenen Art und Weise als Anlageflächen konzipiert sind.

Die winklige Anordnung des Mutterngewindes zu dem Durchzug des Befestigers erlaubt auch eine Ausgestaltung, bei der der Durchzug unter Ausbildung einer Montageöffnung seitlich geöffnet ist. Die Öffnungsweite der Montageöffnung entspricht dabei zumindest dem Außendurchmesser des Gewindes einer zum Anschließen des Befestigers vorgesehenen Gewindestange und somit wiederum zumindest dem Außendurchmesser des Mutterngewindes. In einer solchen Ausgestaltung kann der Befestiger an eine Gewindestange angeschlossen werden, auch wenn dessen Enden nicht oder nicht mehr zugänglich sind. Die winklige Ausführung des Durchzuges zu der Längsachse des Mutterngewindes bildet hinreichende Haltevorsprünge aus, deren Innenwand Teil der Gewindeabschnitte sind, damit der Befestiger, wenn in seine das Gewinde einer Gewindestange kämmende Stellung hinein verkippt ist, sicher an der Gewindestange gehalten ist.

Von besonderem Vorteil des erfindungsgemäßen Befestigers ist, dass dieser keine gegeneinander bewegbaren und zur Betätigung des Befestigers gegeneinander verstellbare Teile umfasst. Dieses ermöglicht vor allem eine einstückige Ausbildung unter Verwendung lediglich eines einzigen Bauteils. Prinzipiell kann ein solcher Befestiger nach Art einer Sechskantmutter ausgebildet sein. Durchaus möglich ist es auch, den Befestiger beispielsweise als Stanzbiegeteil auszuführen. Die voneinander beabstandeten Gewindeabschnitt werden bei einer solchen Ausgestaltung beispielsweise durch in Schenkeln eines U-förmig geformten Befestigers befindliche Langlöcher gebildet. In einer Abwicklung bilden diese Gewindeabschnitte jeweils die Begrenzung eines Langloches. Das Langloch selbst bildet nach Umformung einer solchen Lasche in beispielsweise eine U-Form den Durchzug. Die Ausbildung als Stanzbiegeteil erlaubt es, dass ein solcher Befestiger integraler Bestandteil der Kabelschelle ist. Dann wird der Befestiger zweckmäßigerweise aus derselben Platine zusammen mit der Kabelschelle einstückig erstellt. Selbstverständlich ist auch eine Ausgestaltung aus Kunststoff, beispielsweise als Spritzgussteil möglich.

Weitere Vorteile und Ausgestaltungen der Erfindung ergeben sich aus der nachfolgenden Beschreibung eines Ausführungsbeispiels unter Bezugnahme auf die beigefügten Figuren. Es zeigen:
- **Fig. 1:**: Eine Kabeleinfassung als Teil einer Kabelschelle mit einem daran angeformten Befestiger,
- **Fig. 2:**: die Kabelschelle der Figur 1 bei dem Vorgang des Verstellens einer mit dem Befestiger in Eingriff gestellten Gewindestange,
- **Fig. 3:**: eine vergrößerte Längsschnittdarstellung durch den oberen Teil der Kabeleinfassung mit dem daran angeformten Befestiger der Figur 1,
- **Fig. 4:**: die Kabelschelle der Figur 2 mit einer den Befestiger kämmenden Gewindestange als Teil einer Spannschraube und
- **Fig. 5:**: eine Kabelschelle entsprechend derjenigen der Figur 4 in einer anderen Ausgestaltung ihrer Kabeleinfassung.

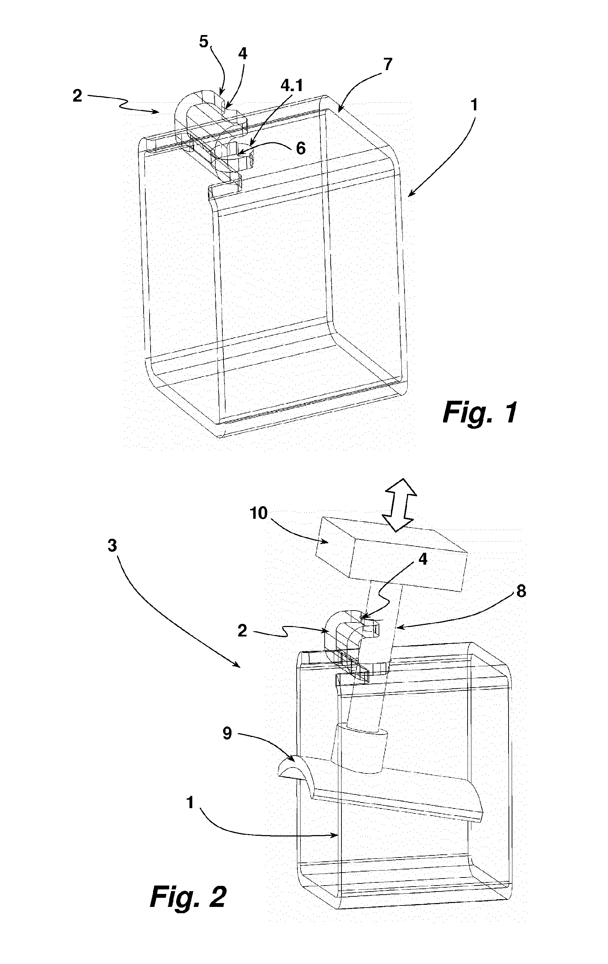

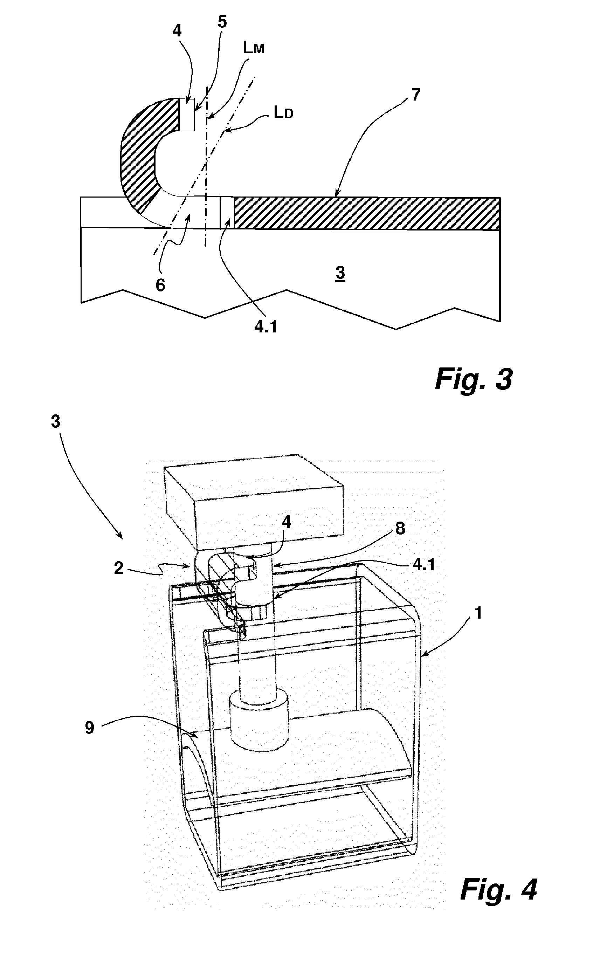

Figur 1 zeigt eine Kabeleinfassung 1 mit einem daran angeformten Befestiger 2, wobei beide Teile Teil einer Kabelschelle 3 sind. Der in Figur 1 gezeigte Befestiger 2 dient zum Führen und Antreiben einer Gewindestange (s. auch Beschreibungen zu Figuren 2 und 4). Die Kabeleinfassung 1 mit ihrem Befestiger 2 ist gläsern dargestellt. Der Befestiger 2 ist aus einem laschenartigen Blechstück als Teil einer Platine zur Ausbildung der Kabeleinfassung 1 in die in Figur 1 gezeigte U-Form gebogen worden. Der Befestiger 2 weist zwei Gewindeabschnitte 4, 4.1 auf. Die sich über etwas weniger als 180° bei diesem dargestellten Ausführungsbeispiel erstreckenden Gewindeabschnitte 4, 4.1 befinden sich zum Einen eingebracht in die Stirnfläche 5 des aufgebogenen Endabschnittes des Befestigers 2 (der Gewindeabschnitt 4). Der Gewindeabschnitt 4.1 befindet sich an der von dem Gewindeabschnitt 4 wegweisenden Seite einer Bohrung 6, die die obere Wand 7 der Kabeleinfassung 1 durchgreift. Bei diesem Ausführungsbeispiel ist die Durchbrechung in der oberen Wand als "Bohrung" angesprochen. Selbstverständlich kann es sich hierbei ebenfalls um eine Ausstanzung handeln. Wesentlich ist, dass es sich um eine Durchbrechung der oberen Wand handelt. Die Bohrung 6 ist nach Art eines Langloches ausgeführt. Die Gewindeabschnitte 4, 4.1 liegen einander in Bezug auf die Längsachse der durch die Gewindeabschnitte 4, 4.1 gebildeten Mutterngewinde einander gegenüber und sind, wie aus der Figur erkennbar, in Längsrichtung des durch den Befestiger 2 bereitgestellten Mutterngewindes voneinander beabstandet. In radialer Richtung ist der Abstand der Gewindeabschnitte 4, 4.1 vorgesehen, damit eine die Bohrung 6 durchgreifende Gewindestange eine aus parallel zur Längsachse durch die Gewindeabschnitte 4, 4.1 gebildeten Mutterngewindeachse die beiden Gewindeabschnitte 4, 4.1 kämmt. Diese Muttergewindeachse ist in Figur 3 mit dem Bezugszeichen L_{M} gekennzeichnet. Infolge der Ausführung der Bohrung 6 nach Art eines Langloches kann eine die Bohrung 6 durchgreifende Gewindestange aus den Gewindeabschnitten 4, 4.1 herausgeschwenkt werden. Auf diese Weise ist sodann ein Durchzug (in Figur 3 mit dem Bezugszeichen L_{D} gekennzeichnet) gebildet, damit eine Gewindestange, ohne dass diese in die Gewindeabschnitte 4, 4.1 eingreift, translatorisch verstellt werden kann.

Figur 2 zeigt eine Gewindestange 8 als weiteren Teil der Kabelschelle 3. Die Gewindestange 8 trägt an ihrem Fuße ein Klemmelement 9 und an ihrem anderen Ende einen Kopf 10. Der Kopf 10 ist nur schematisiert dargestellt und dient zum Handhaben der Gewindestange 8. Bei dem Kopf kann es sich beispielsweise um einen Sechskantkopf oder um einen solchen mit einem Innensechskant handeln. Bei Vorsehen eines Innensechskantes kann dieser auch in die Gewindestange direkt eingebracht sein. Dann ist ein den Durchmesser der Gewindestange vergrößernder Kopf nicht erforderlich. Neben solchen Kopfausgestaltungen, die ausgelegt sind, damit daran ein Schraubwerkzeug angesetzt werden kann, kann der Kopf auch als manuelle Handhabe ausgebildet sein, beispielsweise nach Art einer Flügelmutter. In Figur 2 ist die Gewindestange 8 in einer gegenüber der Längsachse L_{M} des durch die Gewindeabschnitte 4, 4.1 gebildeten Muttergewindes geneigten Stellung gezeigt, und zwar in einer Stellung, in der die Gewindestange 8 nicht in die beiden Gewindeabschnitte 4, 4.1 eingreift und somit in dieser Stellung translatorisch durch die Bohrung 6 hindurch bewegt werden kann, wie dieses durch den Blockpfeil in Figur 2 angedeutet ist. In dieser Stellung kann die Gewindestange 8 und somit das Klemmelement 9, ohne eine Schraubbewegung ausüben zu müssen, gegenüber dem Befestiger 2 und damit gegenüber der Kabeleinfassung 1 als Gehäuse verstellt werden. Ist das Klemmelement 9 auf die Oberseite von in der Kabeleinfassung 1 angeordneten Kabeln aufgesetzt, wird die Gewindestange 8 gekippt, so dass dann das Außengewinde derselben mit den Gewindeabschnitten 4, 4.1 des Befestigers 2 in Eingriff gestellt wird. Diese Situation ist in Figur 4 gezeigt. Somit kann eine Schnellverstellung der Gewindestange 8 zum Einrichten des Klemmelementes 9 an der Oberseite von darunter befindlichen Kabeln gebracht werden, bevor diese anschließend gekippt und mit den Gewindeabschnitten 4, 4.1 in Eingriff gestellt wird. Wenn das Klemmelement 9 auf der Oberseite von in der Kabeleinfassung 1 der Kabelschelle 3 befindlichen Kabeln aufsitzt, wird diese in ihre Schraubverstellungsposition quasi selbsttätig gebracht. Sodann wird die gewünschte Klemmung zwischen dem Klemmelement 9 und darunter befindlichen Kabeln durch Drehen der Gewindestange 8 gegenüber dem Befestiger 2 hervorgerufen. Es versteht sich, dass dann bereits mit wenigen Umdrehungen die gewünschte Montage fertiggestellt ist.

Bei dem dargestellten Ausführungsbeispiel weist, was bevorzugt ist, das Klemmelement 9 eine gewisse Längserstreckung in Längsrichtung der einzuklemmenden Kabel auf. Ist das Klemmelement auf der Oberseite eines oder auch mehrerer Kabel festgesetzt, ist hierdurch zugleich wirksam einer Lockerungsbewegung entgegengewirkt. Ein unbeabsichtigtes Herausrutschen der Gewindestange 8 aus den diese kämmenden Gewindeabschnitten 4, 4.1 ist durch die sich über eine gewisse Strecke in Längserstreckung des Kabels erstreckende Abstützung des Klemmelementes 9 auf der Oberseite des oder der Kabel wirksam verhindert. Aus diesem Grunde ist bei dem dargestellten Ausführungsbeispiel zwischen der Gewindestange 8 und dem Klemmelement 9 zwar eine Drehentkopplung, jedoch keine scharnierende Bewegung möglich, durch die die Gewindestange 8 gegenüber dem Klemmelement 9 abkippen könnte.

Figur 3 zeigt in einer vergrößerten Schnittdarstellung durch den oberen Abschluss der Einfassung 1, und zwar im Bereich der Wand 7 die Bohrung 6 und die beiden zusammenwirkenden Gewindeabschnitte 4, 4.1. Eingetragen sind in dieser Figur die Längsachse L_{M} des Mutterngewindes und die Längsachse L_{D} als Achse für den Durchzug.

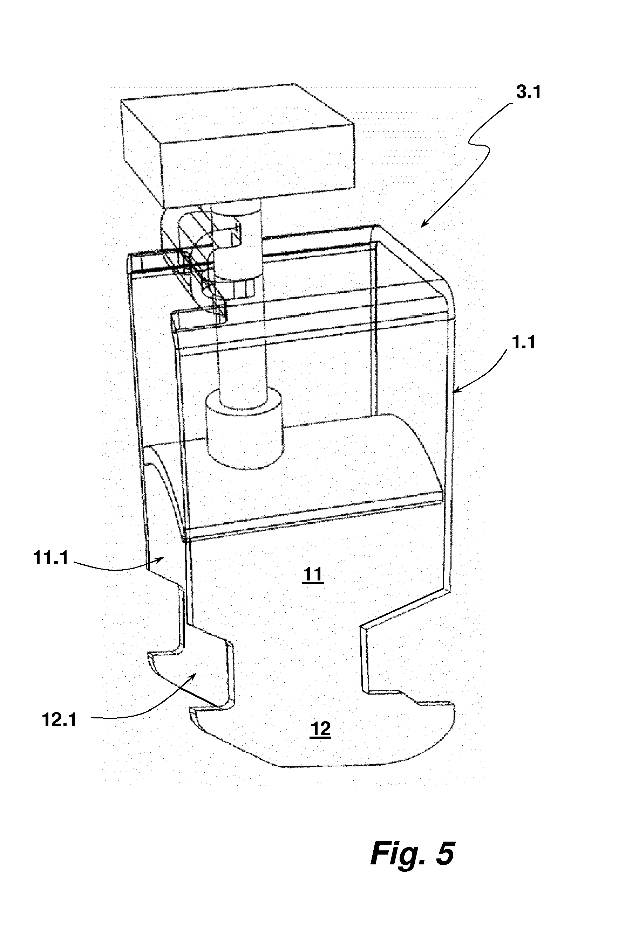

Figur 5 zeigt eine Kabelschelle, die prinzipiell aufgebaut ist wie die Kabelschelle 1 der vorangegangenen Figuren. Die in Figur 5 gezeigte Kabelschelle 3.1 unterscheidet sich von der Kabelschelle 3 durch die Ausgestaltung ihrer Kabeleinfassung 1.1. Während die Kabeleinfassung 1 der Kabelschelle 3 nach Art eines geschlossenen Gehäuses ausgebildet ist, ist die Kabeleinfassung 1.1 der Kabelschelle 3 als Bügel ausgeführt. Die Kabelschelle 3.1 dient zum Anschließen derselben an beispielsweise eine Sprosse einer Kabelleiter. Zu diesem Zweck ist die Kabeleinfassung 1.1 U-förmig ausgeführt. Die beiden Schenkel 11, 11.1 der Kabeleinfassung 1.1 tragen unterseitig jeweils einen Anschlusskopf 12, 12.1, ausgebildet um in den Hinterschnitt einer Sprosse einer Kabelleiter eingreifen zu können. Die Anschlussköpfe 12, 12.1 werden in den Hinterschnitt einer solchen Sprosse eingeschwenkt. Im Übrigen entspricht die Kabelschelle 3.1 vor allem hinsichtlich der Ausbildung seines Befestigers der vorbeschriebenen Kabelschelle 3.

Vorstehend ist ein Ausführungsbeispiel der Erfindung beschrieben worden, aus dem sich die besonderen Eigenschaften der beanspruchten Kabelschelle mit seinem Gewinde kuppelbarem Mutterngewinde ergibt. Es versteht sich, dass die Erfindung, ohne den Umfang der geltenden Ansprüche zu verlassen, auch auf andere Weise realisiert werden kann.

### Bezugszeichenliste

- 1, 1.1: Kabeleinfassung
- 2: Befestiger
- 3,3.1: Kabelschelle
- 4,4.1: Gewindeabschnitt
- 5: Stirnfläche
- 6: Bohrung
- 7: Wand
- 8: Gewindestange
- 9: Klemmelement
- 10: Kopf
- 11, 11.1: Schenkel
- 12, 12.1: Anschlusskopf
- L_{M}: Längsachse Mutterngewinde
- L_{D}: Längsachse Durchzug

## Patentansprüche

1. Kabelschelle mit einer Gewindestange (8), die an ihrem einen Ende einen Kopf (10) und an ihrem anderen Ende ein auf zumindest ein zu haltendes Kabel wirkendes Klemmelement (9) aufweist, mit einer Kabeleinfassung (1, 1.1) und mit einem zum Kämmen des Gewindes der Gewindestange (8) ausgelegten Mutterngewinde aufweisenden Befestiger (2), **dadurch gekennzeichnet, dass** das Mutterngewinde des Befestigers (2) zwei in Längserstreckung des Mutterngewindes voneinander beabstandete, einander bezüglich der Längsachse des Mutterngewindes gegenüberliegende und sich über maximal 180 Grad erstreckende Gewindeabschnitte (4, 4.1) aufweist und dass der Befestiger (2) einen winklig zur Längsachse des Mutterngewindes angeordneten und dieses zwischen den voneinander wegweisenden Abschlüssen der Gewindeabschnitte (4, 4.1) schneidenden Durchzug umfasst, dessen lichte Weite zumindest dem Außendurchmessers des Mutterngewindes entspricht.

2. Kabelschelle nach Anspruch 1, **dadurch gekennzeichnet, dass** der Durchzug zur Ausbildung einer Montageöffnung seitlich geöffnet ist und die lichte Weite der Montageöffnung dem Außendurchmesser des Gewindes einer zum Anschließen des Befestigers (2) vorgesehenen Gewindestange (8) entspricht oder größer als dieses ist.

3. Kabelschelle nach Anspruch 1 oder 2, **dadurch gekennzeichnet, dass** sich die Längsachse des Durchzuges und die Längsachse des Mutterngewindes in der Mitte oder etwa im Bereich der Mitte der Längserstreckung des Mutterngewindes schneiden.

4. Kabelschelle nach einem der Ansprüche 1 bis 3, **dadurch gekennzeichnet, dass** zumindest eine Endfläche des Befestigers (2) eine rechtwinklig zur Längsachse des Mutterngewindes verlaufende Anlagefläche bildet.

5. Kabelschelle nach einem der Ansprüche 1 bis 4, **dadurch gekennzeichnet, dass** der Befestiger (2) U-förmig ausgebildet ist und das Muttergewinde sowie der Durchzug durch zwei Langlöcher gebildet sind, wobei die Gewindeabschnitte (4, 4.1) zur Ausbildung des Muttergewindes sich jeweils an demselben Ende eines jeden Langloches bei abgewickeltem Befestiger (2) befinden.

6. Kabelschelle nach Anspruch 5, **dadurch gekennzeichnet, dass** diesem ein auf dem Gewinde einer Gewindestange (8) sitzendes Stützelement mit einer Aufnahme zugeordnet ist, wobei die Aufnahme derart ausgeführt ist, damit darin der eine Schenkel des U-förmigen Befestigers (2) einpasst.

7. Kabelschelle nach einem der Ansprüche 1 bis 6, **dadurch gekennzeichnet, dass** die Kabeleinfassung (1.1) U-förmig ausgeführt ist und an den Enden seiner Schenkel (11, 11.1) Anschlusselemente, insbesondere Anschlussköpfe (12, 12.1) zum Anschließen der Kabelschelle (3, 3.1) an eine Sprosse als Teil einer Kabelleiter trägt.

8. Kabelschelle nach Anspruch 7, **dadurch gekennzeichnet, dass** die Einfassung Teil eines Gehäuses ist.
